# EUROPEAN PATENT APPLICATION

(11) **EP 4 610 517 A1**
(43) Date of publication of application: **03.09.2025**
(21) Application number: 23882379.3
(22) Date of filing: 05.10.2023
(51) Int. Cl.: F16H 25/22, B21J 5/02, B21J 5/12, B21K 1/56, F16H 25/24

(54) **PRODUCTION METHOD FOR NUT USED IN BALL SCREW AND IRONING METHOD**

(30) Priority: 26.10.2022 JP 2022171453
(71) Applicant: NTN Corporation, Osaka-shi Osaka 530-0005 (JP)
(72) Inventor: FUJITA, Takuya, Iwata-shi Shizuoka 438-8510 (JP)
(74) Representative: Eder Schieschke & Partner mbB
(86) International application number: PCT/JP2023/036450
(87) International publication number: WO 2024/090170

(57) **Abstract**

Provided is a method of manufacturing a nut (5) for a ball screw, the ball screw including: a screw shaft (3) having a spiral ball rolling groove (3a) formed in an outer peripheral surface of the screw shaft (3); a nut (5) having a spiral ball rolling groove (5a) that is formed in an inner peripheral surface of the nut (5) so as to be opposed to the ball rolling groove (3a) of the screw shaft (3); and a plurality of balls (9) arranged in a ball rolling path (7) formed by both of the ball rolling grooves (3a, 5a), the nut (5) having a ball circulation groove (20) formed in the inner peripheral surface and allowing the balls (9) to return from an end point to a start point of the ball rolling path (7), the method including: a ball circulation groove forming step of forming the ball circulation groove (20); and a ball rolling groove forming step of forming the ball rolling groove (5a). In the ball circulation groove forming step, the ball circulation groove and a phase reference (S) are formed simultaneously in a blank (M) for the nut (5) by plastic working. The ball rolling groove forming step is performed using the phase reference (S).

## Description

### TECHNICAL FIELD

The present invention relates to a method of manufacturing a nut for a ball screw and a method of ironing a nut for a ball screw.

### BACKGROUND ART

A ball screw includes: a nut having a spiral groove formed in an inner peripheral surface of the nut; a screw shaft having a spiral groove formed in an outer peripheral surface of the screw shaft; balls arranged in a raceway formed by the spiral groove of the nut and the spiral groove of the screw shaft; and a ball return path allowing the balls to return from an end point to a start point of the raceway. The ball screw is a device in which the balls roll in the raceway so that the nut is moved relative to the screw shaft. Such ball screws are used not only in positioning devices for general industrial machinery, and the like, but also in electric actuators installed in vehicles such as automobiles, motorcycles, and ships.

There are a circulation tube system, an internal-deflector system, or other systems for ball return paths for ball screws. In the case of the internal-deflector system, an internal deflector having a recessed portion that forms the ball return path is fitted into a through-hole of the nut. In contrast, when the recessed portion (ball circulation groove) that forms the ball return path is formed directly in the inner peripheral surface of the nut, assembly labor and cost can be reduced, and improvement in reliability of ball circulation can be expected.

In Patent Document 1, there is described a method of manufacturing a nut for a ball screw in which a ball rolling groove that forms, together with a spiral groove of a screw shaft, a raceway allowing balls to circulate therein, and a ball circulation groove that allow the balls to return from an end point to a start point of the raceway are formed in an inner peripheral surface of the nut. The method of manufacturing a nut for a ball screw includes: a blank forming step of forming a tubular blank from a nut workpiece; a circulation groove forming step of forming a ball circulation groove in an inner peripheral surface of the blank; and a rolling groove forming step of forming a ball rolling groove in the inner peripheral surface of the blank. The method is characterized in that a machining reference is formed in a step prior to the rolling groove forming step, that this machining reference has a phase reference, an axial direction reference, and a radial direction reference that are formed in the blank forming step, and that the machining reference is used in common in the circulation groove forming step and the rolling groove forming step.

### PRIOR ART DOCUMENTS

Patent Document 1: JP 6015444 B2

### SUMMARY OF THE INVENTION

### PROBLEMS TO BE SOLVED BY THE INVENTION

However, when the phase reference formed in the blank forming step is used in common in the circulation groove forming step and the rolling groove forming step as proposed in Patent Document 1, it is required to specify a position by fitting a member on a side of a device for forming a groove (circulation groove or rolling groove) and the phase reference formed in the blank forming step to each other. However, a minimum gap is required for fitting the member on the side of the device for forming a groove and the phase reference to each other, and this gap causes a phase shift in each of the circulation groove forming step and the rolling groove forming step. This has been found to be a problem.

In view of the above-mentioned problem, the present invention has an object to provide a method of manufacturing a nut for a ball screw with high precision and a method of ironing a nut for a ball screw with high precision, which can form a ball circulation groove with high precision, and prevent misalignment between a ball rolling groove and the ball circulation groove.

### SOLUTION TO THE PROBLEMS

As a result of various studies and verifications to achieve the above-mentioned object, the inventors of the present invention have come up with the following technical matters and have reached the present invention.
(1) A manufacturing method comprising a circulation groove forming step of simultaneously forming a ball circulation groove and a phase reference to achieve less phase shift from the ball circulation groove.
(2) The manufacturing method comprising a rolling groove forming step, which is performed as a subsequent step through use of the phase reference with less phase shift from the ball circulation groove.
(3) An ironing method in which an inner die assembly has the highly rigid split-die structure that can be reduced in diameter, an outer peripheral surface of a blank for a nut is ironed by a drawing die in the circulation groove forming step, and the ball circulation groove is transferred to a forming surface of the inner die assembly to form the ball circulation groove.

As a technical measure for achieving the above-mentioned object, according to a first invention, there is provided a method of manufacturing a nut for a ball screw, the ball screw comprising: a screw shaft having a spiral ball rolling groove formed in an outer peripheral surface of the screw shaft; a nut having a spiral ball rolling groove that is formed in an inner peripheral surface of the nut so as to be opposed to the ball rolling groove of the screw shaft; and a plurality of balls arranged in a ball rolling path formed by both of the ball rolling grooves, the nut having a ball circulation groove that is formed in the inner peripheral surface and allows the balls to return from an end point to a start point of the ball rolling path, the method comprising: a circulation groove forming step of forming the ball circulation groove; and a rolling groove forming step of forming the ball rolling groove. In the circulation groove forming step, the ball circulation groove and a phase reference are formed simultaneously in a blank for the nut by plastic working. The rolling groove forming step is performed using the phase reference. With the above-mentioned configuration, misalignment between the ball rolling groove and the ball circulation groove can be prevented, thereby being capable of achieving the method of manufacturing a nut for a ball screw with high precision.

In particular, ironing is adopted as the plastic working for simultaneously forming the ball circulation groove and the phase reference in the above-mentioned circulation groove forming step. Thus, the ball circulation groove can be formed with high precision, and the suppression of a phase shift between the ball circulation groove and the phase reference can be promoted.

According to a second invention, there is provided a method of ironing a nut for a ball screw, the ball screw comprising: a screw shaft having a spiral ball rolling groove formed in an outer peripheral surface of the screw shaft; a nut having a spiral ball rolling groove that is formed in an inner peripheral surface of the nut so as to be opposed to the ball rolling groove of the screw shaft; and a plurality of balls arranged in a ball rolling path formed by both of the ball rolling grooves, the nut having a ball circulation groove that is formed in the inner peripheral surface and allows the balls to return from an end point to a start point of the ball rolling path. A die assembly to be used for the ironing comprises: a split forming punch having a projecting portion corresponding to a recessed portion of the ball circulation groove; a punch base configured to regulate a position of the split forming punch, and to receive a load acting on the split forming punch; a drawing die configured to reduce an outer diameter of a blank by ironing an outer peripheral surface of the blank for the nut; and a punch holder configured to receive an axial load acting on the blank at the time of the ironing of the outer peripheral surface of the blank, and to regulate the position of the split forming punch. The ball circulation groove is formed by reducing the blank in diameter with the drawing die. With the above-mentioned configuration, the ball circulation groove can be formed with high precision. Further, when the ball circulation groove and the phase reference are formed simultaneously in the circulation groove forming step, the suppression of a phase shift between the ball circulation groove and the phase reference can be promoted, thereby being capable of achieving the method of ironing a nut for a ball screw with high precision. In addition, an inner die assembly has the highly rigid split-die structure that can be reduced in diameter. This is advantageous in terms of a die assembly life, in addition to being able to form the ball circulation groove with high precision.

The above-mentioned punch holder comprises a forming surface corresponding to a phase reference to be used during machining of the ball rolling groove, and the ball circulation groove and the phase reference can be formed simultaneously by reducing the blank in diameter with the drawing die. This can promote the suppression of a phase shift between the ball circulation groove and the phase reference.

The above-mentioned die assembly to be used for the ironing further comprises an upper surface restraining die, and axial deformation can be suppressed by restraining an upper surface of the blank by the upper surface restraining die.

### EFFECTS OF THE INVENTION

According to the method of manufacturing a nut for a ball screw of the first invention, misalignment between the ball rolling groove and the ball circulation groove can be prevented, thereby being capable of achieving the method of manufacturing a nut for a ball screw with high precision.

According to the method of ironing a nut for a ball screw of the second invention, the ball circulation groove can be formed with high precision. Further, when the ball circulation groove and the phase reference are formed simultaneously in the circulation groove forming step, the suppression of a phase shift between the ball circulation groove and the phase reference can be promoted, thereby being capable of achieving the method of ironing a nut for a ball screw with high precision.

### BRIEF DESCRIPTION OF DRAWINGS

FIG. 1 is a partial longitudinal sectional view of a ball screw to be subjected to a method of manufacturing a nut for a ball screw according to one embodiment of a first invention and a method of ironing a nut for a ball screw according to one embodiment of a second invention.
FIG. 2 is a cross-sectional view of a main part of a nut of FIG. 1.
FIG. 3 is an enlarged longitudinal sectional view of a ball circulation path of FIG. 1.
FIG. 4 is a longitudinal sectional view for illustrating an overview of a circulation groove forming step in the method of manufacturing a nut for a ball screw according to one embodiment of the first invention.
FIG. 5 is a longitudinal sectional view for illustrating the overview of the circulation groove forming step in the method of manufacturing a nut for a ball screw according to this embodiment.
FIG. 6A is a plan view and a longitudinal sectional view of a nut workpiece after being subjected to turning, for illustrating the nut workpiece having a ball circulation groove and a phase reference that are formed based on the method of manufacturing a nut for a ball screw according to this embodiment.
FIG. 6B is a plan view and a longitudinal sectional view of the nut workpiece after being subjected to the circulation groove forming step, for illustrating the nut workpiece having the ball circulation groove and the phase reference that are formed based on the method of manufacturing a nut for a ball screw according to this embodiment.
FIG. 7A is a longitudinal sectional view for illustrating an overview of a rolling groove forming step in the method of manufacturing a nut for a ball screw according to this embodiment.
FIG. 7B is a plan view for illustrating the overview of the rolling groove forming step in the method of manufacturing a nut for a ball screw according to this embodiment.
FIG. 8A is a plan view for illustrating a split forming punch in a die assembly in the method of ironing a nut for a ball screw according to one embodiment of the second invention.
FIG. 8B is a side view for illustrating the split forming punch in the die assembly in the method of ironing a nut for a ball screw according to one embodiment of the second invention.
FIG. 8C is a cross-sectional view for illustrating the split forming punch in the die assembly in the method of ironing a nut for a ball screw according to one embodiment of the second invention.
FIG. 9A is an enlarged view of a part D of FIG. 8A, for illustrating details of the split forming punch of FIGS. 8.
FIG. 9B is a cross-sectional view taken along the line E-E of FIG. 9A, for illustrating the details of the split forming punch of FIGS. 8.
FIG. 9C is a view as seen from a direction indicated by the arrow F of FIG. 8B, for illustrating the details of the split forming punch of FIGS. 8.
FIG. 10 is a plan view for illustrating a modification example of the split forming punch.
FIG. 11A is a right-hand side view of FIG. 11B, for illustrating a punch base in the die assembly in the method of ironing a nut for a ball screw according to this embodiment.
FIG. 11B is a plan view for illustrating the punch base in the die assembly in the method of ironing a nut for a ball screw according to this embodiment.
FIG. 11C is a left-hand side view of FIG. 11B, for illustrating the punch base in the die assembly in the method of ironing a nut for a ball screw according to this embodiment.
FIG. 11D is a cross-sectional view taken along the line H-H of FIG. 11E, for illustrating the punch base in the die assembly in the method of ironing a nut for a ball screw according to this embodiment.
FIG. 11E is a longitudinal sectional view taken along the line G-G of FIG. 11B, for illustrating the punch base in the die assembly in the method of ironing a nut for a ball screw according to this embodiment.
FIG. 12A is a plan view for illustrating a punch holder in the die assembly in the method of ironing a nut for a ball screw according to this embodiment.
FIG. 12B is a longitudinal sectional view for illustrating the punch holder in the die assembly in the method of ironing a nut for a ball screw according to this embodiment.
FIG. 12C is a sectional view taken along the line I-I of FIG. 12A, for illustrating the punch holder in the die assembly in the method of ironing a nut for a ball screw according to this embodiment.
FIG. 13A is a view for illustrating a state in which a blank has been set, and illustrating an ironing step of the method of ironing a nut for a ball screw according to this embodiment.
FIG. 13B is a view for illustrating a state immediately before ironing, and illustrating the ironing step of the method of ironing a nut for a ball screw according to this embodiment.
FIG. 13C is a view for illustrating a state of the start of ironing, and illustrating the ironing step of the method of ironing a nut for a ball screw according to this embodiment.
FIG. 13D is a view for illustrating a state of the end of ironing, and illustrating the ironing step of the method of ironing a nut for a ball screw according to this embodiment.
FIG. 13E is a view for illustrating a state in which a nut workpiece has been separated from a forming punch, and illustrating the ironing step of the method of ironing a nut for a ball screw according to this embodiment.
FIG. 13F is a view for illustrating a state in which the nut workpiece is discharged, and illustrating the ironing step of the method of ironing a nut for a ball screw according to this embodiment.

### EMBODIMENTS OF THE INVENTION

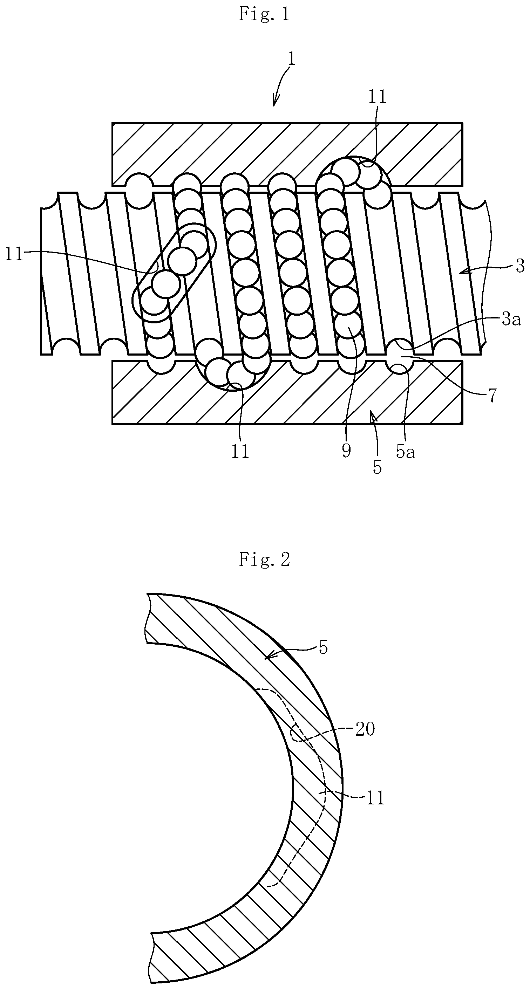

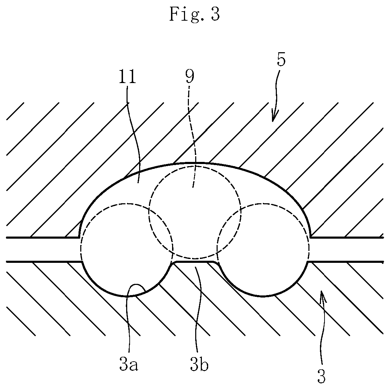

First, with reference to FIG. 1 to FIG. 3, description is given of a ball screw to be subjected to a method of manufacturing a nut for a ball screw according to one embodiment of a first invention and a method of ironing a nut for a ball screw according to one embodiment of a second invention. FIG. 1 is a partial longitudinal sectional view of a ball screw. FIG. 2 is a cross-sectional view of a main part of a nut of FIG. 1. FIG. 3 is an enlarged longitudinal sectional view of a ball circulation path of FIG. 1. As illustrated in FIG. 1, a ball screw 1 comprises: a screw shaft 3 having a spiral thread groove (also referred to as "ball rolling groove") 3a formed in an outer peripheral surface of the screw shaft 3; a nut 5 having a spiral thread groove (also referred to as "ball rolling groove") 5a formed in an inner peripheral surface of the nut 5 so as to be opposed to the thread groove 3a of the screw shaft 3; a plurality of balls 9 loaded so as to be freely rollable in a spiral ball rolling path 7 formed by both of the thread grooves 3a and 5a; and a ball circulation path 11 allowing the balls 9 to return from an end point to a start point of the ball rolling path 7 to circulate the balls 9.

The balls 9 rotate around the screw shaft 3 while moving in the ball rolling path 7, to reach the end point of the ball rolling path 7. At that point, the balls 9 are picked up from one end portion of the ball circulation path 11 to pass through the ball circulation path 11, and are then returned to the start point of the ball rolling path 7 from another end portion of the ball circulation path 11.

In the ball screw 1, when the nut 5, which is threadedly engaged with the screw shaft 3 through intermediation of the balls 9, and the screw shaft 3 are brought into relative rotational motion, the screw shaft 3 and the nut 5 move relative to each other in an axial direction through rolling of the balls 9. The ball rolling path 7 and the ball circulation path 11 form an endless ball path, and the balls 9 rolling in the ball rolling path 7 infinitely circulate in the endless ball path. Thus, the screw shaft 3 and the nut 5 can continuously move relative to each other. A sectional shape of the ball rolling path 7 may be a circular arc shape or a Gothic arch shape. Materials of the screw shaft 3, the nut 5, and the balls 9 are not particularly limited, and general materials, such as metal, steel, and ceramics, are used.

The ball circulation path 11 is described with reference to FIG. 2 and FIG. 3. The ball circulation path 11 is integrally formed on the inner peripheral surface of the nut 5. A part of the cylindrical inner peripheral surface of the nut 5 is recessed to form a ball circulation groove 20, and the ball circulation groove 20 is used as the ball circulation path 11. Accordingly, unlike a case of a ball circulation system such as a tube system or an internal-deflector system, no separate component forming the ball circulation path is mounted.

As illustrated in FIG. 3, the ball 9 that has rolled to the end point of the ball rolling path 7 is picked up from one end portion of the ball circulation path 11, and sinks inside the nut 5, that is, sinks radially outward. Then, the ball 9 climbs over a thread ridge portion 3b of the thread groove 3a of the screw shaft 3 through the ball circulation path 11, and is returned to the start point of the ball rolling path 7 from another end portion of the ball circulation path 11. The sectional shape of the ball circulation path 11 may be a circular arc shape or a Gothic arch shape.

As described above, the thread groove 5a in which the balls 9 are allowed to roll, and the ball circulation groove 20 in which the balls 9 are allowed to circulate are formed in the inner peripheral surface of the nut 5. The thread groove 5a is a ball rolling groove, and hence is also referred to as "ball rolling groove 5a". A ball rolling groove and a ball circulation groove in the claims are used in the above-mentioned meaning.

### <Embodiment of the First Invention>

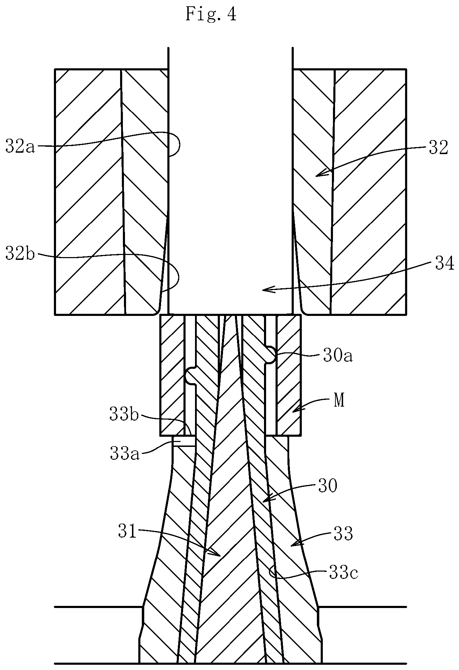

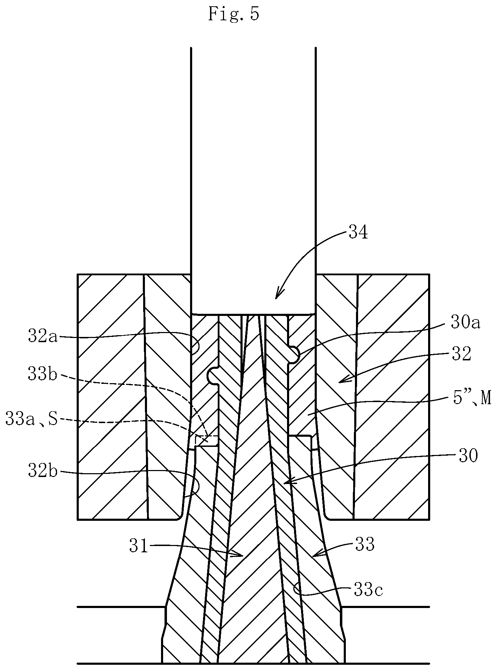

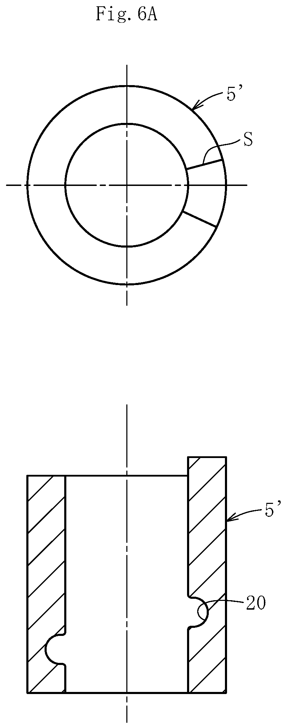

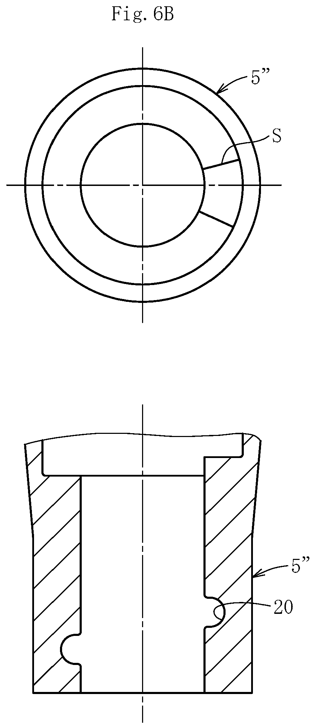

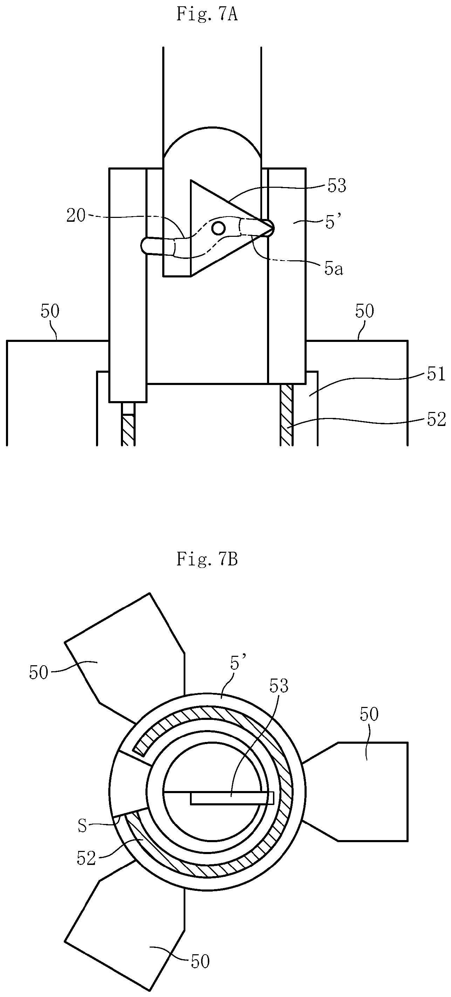

The method of manufacturing a nut for a ball screw according to one embodiment of the first invention is described with reference to FIG. 4 to FIGS. 7. FIG. 4 and FIG. 5 are each a longitudinal sectional view for illustrating an overview of a circulation groove forming step in the method of manufacturing a nut for a ball screw according to one embodiment of the first invention. FIGS. 6 are illustrations of a nut workpiece having a ball circulation groove and a phase reference that are formed based on the method of manufacturing a nut for a ball screw according to this embodiment. FIG. 6B is a plan view and a longitudinal sectional view of the nut workpiece after being subjected to the circulation groove forming step, and FIG. 6A is a plan view and a longitudinal sectional view of the nut workpiece after being subjected to turning. FIGS. 7 are illustrations of an overview of a rolling groove forming step. FIG. 7A is a longitudinal sectional view, and FIG. 7B is a plan view.

Description is given of an example of adopting ironing described later as the circulation groove forming step in the method of manufacturing a nut for a ball screw according to this embodiment. As illustrated in FIG. 4 and FIG. 5, a die assembly to be used in the ironing comprises: a split forming punch 30 having a projecting portion 30a corresponding to a recessed portion of the ball circulation groove 20; a punch base 31 that regulates a position of the split forming punch 30 and receives a load acting on the split forming punch 30; a drawing die 32 that reduces an outer diameter of a blank M by ironing an outer peripheral surface of the blank M for the nut 5; and a punch holder 33 that receives an axial load acting on the blank M at the time of the ironing of the outer peripheral surface of the blank M, and regulates the position of the split forming punch 30.

The drawing die 32 has a cylindrical inner peripheral surface 32a, and a tapered inner peripheral surface 32b is formed on the lower side of the cylindrical inner peripheral surface 32a so as to expand toward an end surface of the drawing die 32. On an upper surface of the punch holder 33, there are formed a forming surface 33a that forms a phase reference, and a surface 33b that regulates an end surface of a nut workpiece 5'. An upper surface restraining die 34 is provided to be slidably fitted to the cylindrical inner peripheral surface 32a of the drawing die 32.

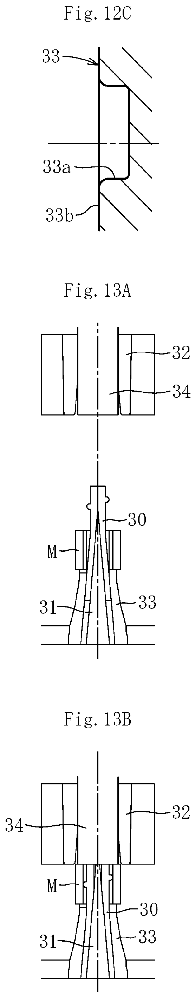

As illustrated in FIG. 13A, although details are described later, the drawing die 32 and the upper surface restraining die 34 are retracted upward, and the split forming punch 30 is moved upward relative to the punch base 31. When the split forming punch 30 is moved upward relative to the punch base 31, the split forming punch 30 is brought into a state of being reduced in diameter. Under this state, the cylindrical blank M is externally fitted to the split forming punch 30 and placed on the punch holder 33. After that, the drawing die 32 and the upper surface restraining die 34 are lowered, the upper surface restraining die 34 is brought into abutment against the split forming punch 30, and the split forming punch 30 is moved relative to the punch base 31 along an inclined surface of the punch base 31. The split forming punch 30 is moved along the inclined surface of the punch base 31, and increased in diameter to a predetermined radial dimension. This state is illustrated in FIG. 4 (corresponding to FIG. 13B described later).

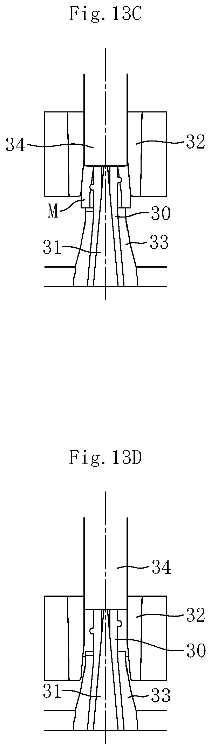

Next, as illustrated in FIG. 5 (corresponding to FIG. 13D described later), when the drawing die 32 is lowered, the outer peripheral surface of the blank M is ironed by the tapered inner peripheral surface 32b of the drawing die 32, and the blank M undergoes a drawing action radially inward and a flowing action axially downward. The blank M is reduced in diameter under the drawing action, and the ball circulation groove 20 is transferred to the inner peripheral surface of the blank M by the projecting portion 30a of the split forming punch 30. Further, the axially flowing action of the blank M is regulated by the punch holder 33, but the recessed forming surface 33a that forms a phase reference is formed on a part of the punch holder 33. A part of a material that has undergone the axially downward flowing action flows into the recessed forming surface 33a, to thereby form a phase reference projecting portion S to be used for positioning a phase direction in a rolling groove forming step. In this way, the ball circulation groove 20 and the phase reference S are formed simultaneously.

The material, whose axially downward flowing action has been regulated by the punch holder 33, tends to flow through a gap between the punch holder 33 and the drawing die 32 or flow axially upward. When the material flows axially upward, the material pressed against the projecting portion 30a of the split forming punch 30 is pulled away from an upper surface of the projecting portion 30a of the split forming punch 30 by the axially upward flowing of the material, and thus a projecting shape of the projecting portion 30a of the split forming punch 30 is not transferred correctly. Accordingly, with the upper surface of the blank M being restrained by the upper surface restraining die 34, the material is prevented from flowing axially upward, thereby being capable of accurately transferring the projecting shape of the projecting portion 30a of the split forming punch 30 to the inner peripheral surface of the blank M.

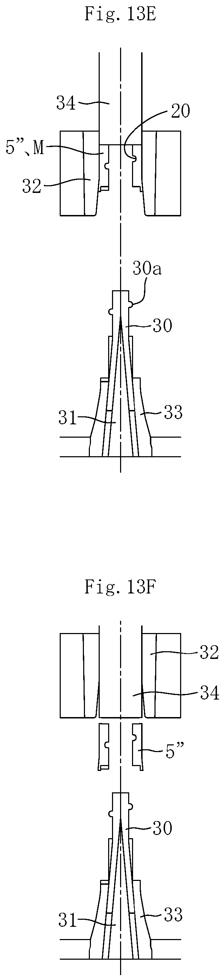

As illustrated in FIG. 13E, although details are described later, when the drawing die 32 is raised, a nut workpiece 5" having the ball circulation groove 20 is raised together with the drawing die 32 while being fitted to the drawing die 32, and the split forming punch 30 is also raised together with the nut workpiece 5" because the projecting portion 30a is fitted in the ball circulation groove 20 of the nut workpiece 5". When the split forming punch 30 is raised, the split forming punch 30 is raised along the inclined surfaces of the punch holder 33 and the punch base 31, and hence is moved radially inward relative to the nut workpiece 5". As a result, the projecting portion 30a of the split forming punch 30 slips out of the ball circulation groove 20 of the nut workpiece 5", and thus the nut workpiece 5" can be removed from the split forming punch 30.

With reference to FIGS. 6, description is given of a nut workpiece having a ball circulation groove and a phase reference that are formed based on the method of manufacturing a nut for a ball screw according to this embodiment. FIG. 6B is a plan view and a longitudinal sectional view of the nut workpiece 5" after being subjected to the circulation groove forming step (after being subjected to ironing), and FIG. 6A is a plan view and a longitudinal sectional view of a nut workpiece 5' after being subjected to turning. The nut workpiece 5" after being subjected to the circulation groove forming step illustrated in FIG. 6B is formed into the nut workpiece 5' illustrated in FIG. 6A by eliminating excess of the outer peripheral surface and one end portion of the nut workpiece 5" by turning. In the nut workpieces 5' and 5", the ball circulation groove 20 and the phase reference S are formed.

As a subsequent step, the rolling groove forming step of forming the ball rolling groove is performed through use of the phase reference S of the nut workpiece 5' illustrated in FIG. 6A. The rolling groove forming step is described with reference to FIGS. 7. FIG. 7A is a longitudinal sectional view for illustrating an overview of the rolling groove forming step, and FIG. 7B is a plan view for illustrating the overview of the rolling groove forming step.

Under a state in which a chuck 50 illustrated in FIG. 7A and FIG. 7B is released, the nut workpiece 5' is arranged on a headstock 51 of a lathe. Then, as illustrated in FIG. 7B, a reference receiving portion 52 that positions the phase reference S formed on the nut workpiece 5' is locked to the phase reference S, and the chuck 50 is tightened. The reference receiving portion 52 on a side of receiving a force in a rotating direction of a main spindle is locked to (brought into abutment against) the phase reference S, and hence no phase shift due to a gap occurs. The main spindle is rotated, and the ball rolling groove 5a is formed by turning in the inner peripheral surface of the nut workpiece 5' with a cutting tool 53. The cutting tool 53 is axially fed in synchronization with rotation of the main spindle, and thus a lead of the ball rolling groove 5a is formed. The ball circulation groove 20 and the phase reference S are formed simultaneously in the rolling groove forming step being the previous step, and hence as illustrated in FIG. 7A, a formation position of the ball rolling groove 5a relative to the ball circulation groove 20 is accurate. Accordingly, there is no misalignment between the end portion of the ball circulation groove 20 and the end portion of the ball rolling groove 5a, and there are almost no steps at the connection between the ball circulation groove 20 and the ball rolling groove 5a, thereby achieving high precision. After turning, heat treatment is performed, and grinding and finishing are performed through similar use of the phase reference S formed on the nut workpiece 5'.

### <Embodiment of the Second Invention>

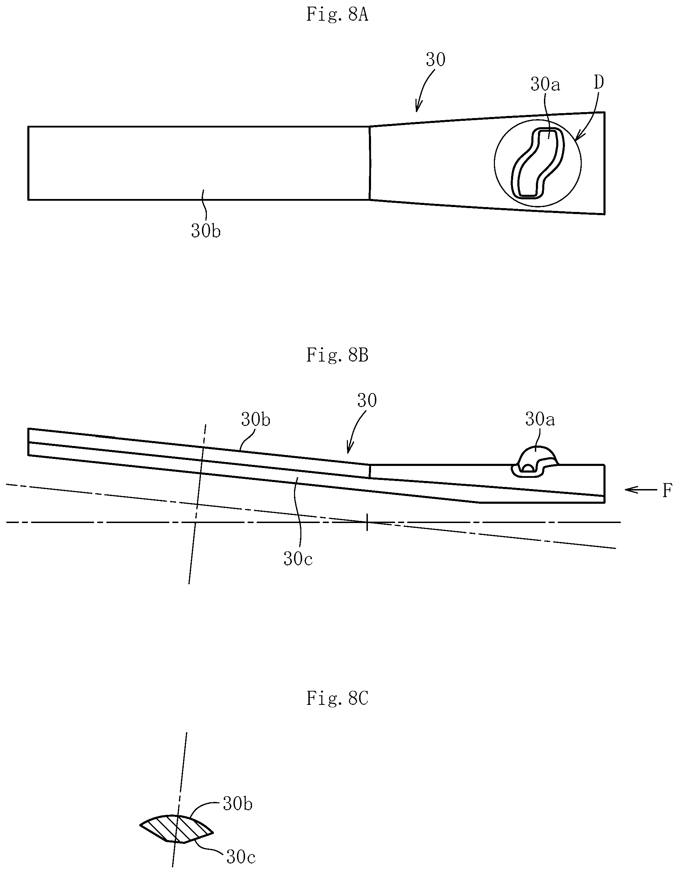

Next, the method of ironing a nut for a ball screw according to one embodiment of the second invention is described with reference to FIG. 4 to FIGS. 6 and FIGS. 8 to FIGS. 13. The matter regarding the circulation groove forming step in the method of manufacturing a nut for a ball screw according to one embodiment of the first invention, which is described above with reference to FIG. 4 to FIGS. 6, is the same as that in the method of ironing a nut for a ball screw according to one embodiment of the second invention, and hence all the above-mentioned matter is applied mutatis mutandis. The method of ironing a nut for a ball screw according to one embodiment of the second invention is described with reference to FIGS. 8 to FIGS. 13, with additional details of a die assembly and an ironing step.

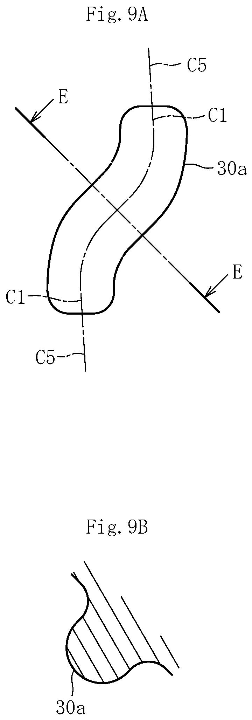

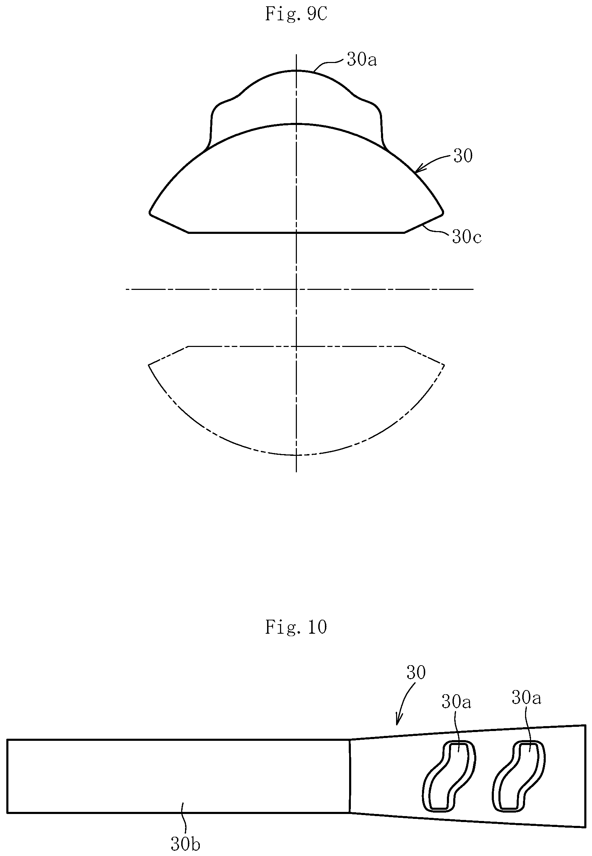

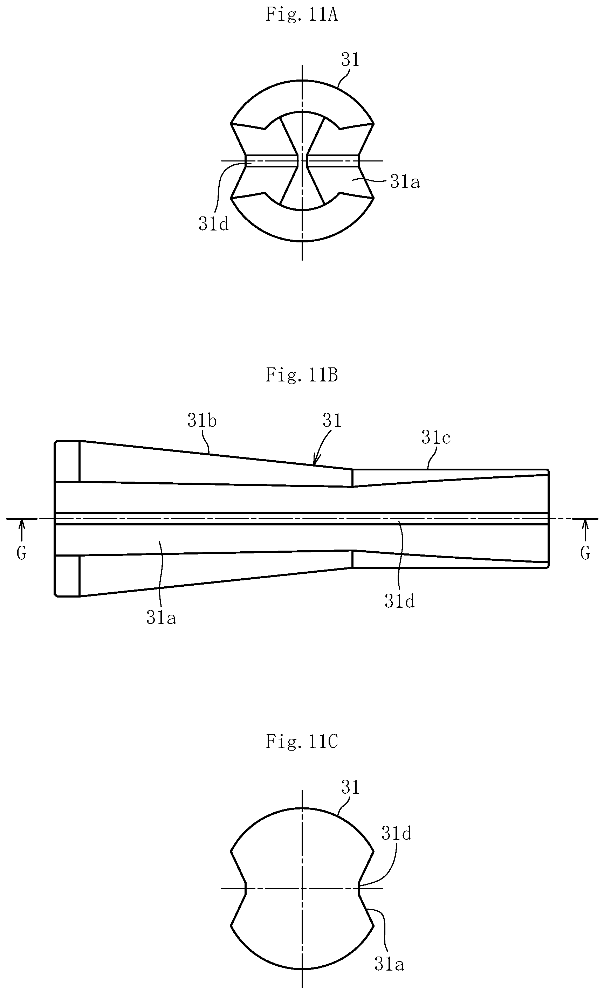

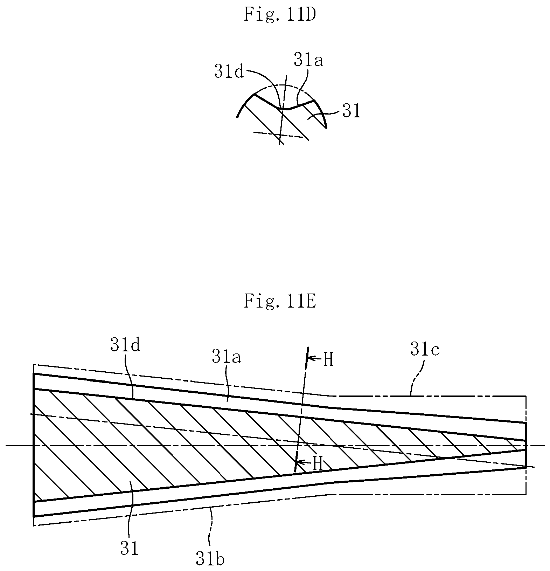

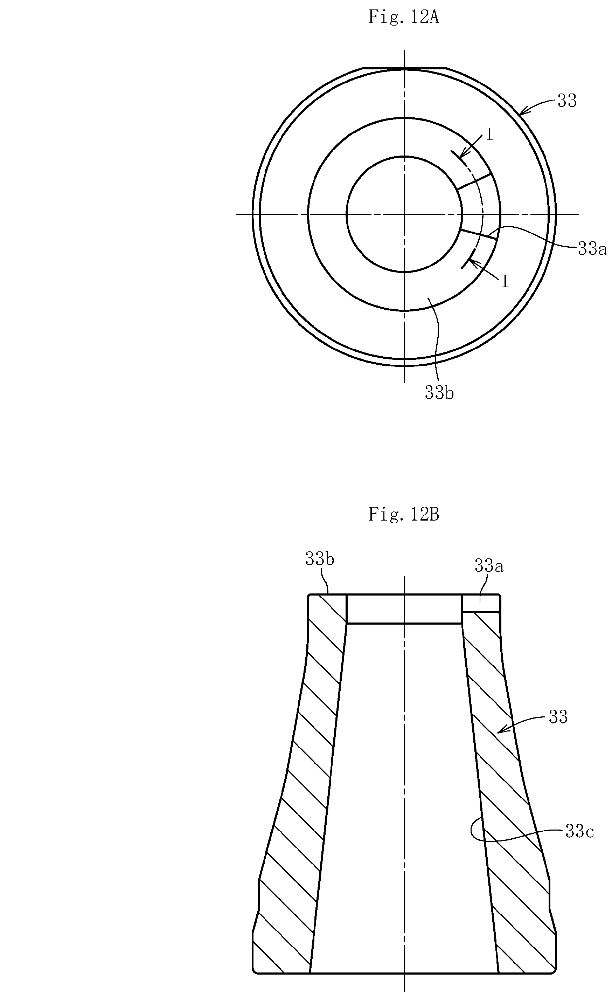

FIGS. 8 are illustrations of a split forming punch in a die assembly in the method of ironing a nut for a ball screw according to one embodiment of the second invention. FIG. 8A is a plan view, FIG. 8B is a side view, and FIG. 8C is a cross-sectional view. FIGS. 9 are illustrations of details of the split forming punch of FIGS. 8. FIG. 9A is an enlarged view of a part D of FIG. 8A, FIG. 9B is a sectional view taken along the line E-E of FIG. 9A, and FIG. 9C is a view as seen from a direction indicated by the arrow F of FIG. 8B. FIG. 10 is a plan view for illustrating a modification example of the split forming punch. FIGS. 11 are illustrations of a punch base in the die assembly in the method of ironing a nut for a ball screw according to this embodiment. FIG. 11A is a right-hand side view of FIG. 11B, FIG. 11B is a plan view, FIG. 11C is a left-hand side view of FIG. 11B, FIG. 11E is a longitudinal sectional view taken along the line G-G of FIG. 11B, and FIG. 11D is a cross-sectional view taken along the line H-H of FIG. 11E. FIGS. 12 are illustrations of a punch holder in the die assembly in the method of ironing a nut for a ball screw according to this embodiment. FIG. 12A is a plan view, FIG. 12B is a longitudinal sectional view, and FIG. 12C is a sectional view taken along the line I-I of FIG. 12A.

As illustrated in FIG. 8A, the split forming punch 30 in the method of ironing a nut for a ball screw according to this embodiment is split into two pieces under a state in which the projecting portion 30a corresponding to the recessed portion of the ball circulation groove 20 is formed on one piece of the split forming punch 30. As illustrated in FIG. 8B and FIG. 8C, one piece of the split forming punch 30 comprises: an arc-shaped tapered outer peripheral surface 30b that is slid and guided along a tapered inner peripheral surface 33c of the punch holder 33 illustrated in FIG. 4; and a V-shaped side surface 30c that is slid and guided along a V-shaped tapered guide surface 31a of the punch base 31 (see FIGS. 11). The tapered outer peripheral surface 30b of one piece of the split forming punch 30 is formed into a circular arc shape with a constant radius of curvature, and hence the split forming punch 30 is slidable in a direction of the generating line of the tapered inner peripheral surface 33c of the punch holder 33. An axial region of the split forming punch 30 on the side provided with the projecting portion 30a is formed in parallel to the axial direction in order to reduce interference and stabilize the abutment state at the time when paired pieces of the split forming punch 30 are reduced in diameter.

As illustrated in FIG. 9A, the projecting portion 30a corresponding to the recessed portion of the ball circulation groove 20 is formed into an S shape, and the projecting portion 30a is formed so that a centerline C1 of both end portions of the projecting portion 30a is smoothly connected to a centerline C5 of the ball rolling groove 5a. As illustrated in FIG. 9B, the sectional shape of the projecting portion 30a taken along the line E-E is formed into a circular arc shape or a Gothic arch shape. As illustrated in FIG. 9C, a circumferential shape of the projecting portion 30a formed to protrude from the outer peripheral surface of the split forming punch 30 can be understood when the split forming punch 30 illustrated in FIG. 8B is seen from the direction indicated by the arrow F. A center portion of the projecting portion 30a in a circumferential direction transfers a deep portion of the ball circulation groove 20, which allows the ball 9 to climb over the thread ridge portion 3b of the screw shaft 3 as illustrated in FIG. 3.

A modification example of the split forming punch 30 is illustrated in FIG. 10. In this modification example, a plurality of (two) projecting portions 30a are formed to correspond to recessed portions of the ball circulation groove 20. The number of the projecting portions 30a of the split forming punch 30 is appropriately set in accordance with design specifications of ball screws. The other configurations of the split forming punch 30 are the same as the matter described above with reference to FIGS. 8 and FIGS. 9, and hence overlapping description is omitted.

Next, as illustrated in FIG. 11B, the punch base 31 is a rod-shaped component comprising: a tapered outer peripheral surface 31b illustrated on the left side of FIG. 11B (bottom side); and a straight and small-diameter outer peripheral surface 31c. A V-shaped tapered guide surface 31a is formed across the tapered outer peripheral surface 31b and the straight and small-diameter outer peripheral surface 31c. Along the V-shaped tapered guide surface 31a of the punch base 31, as described above, the V-shaped side surface 30c (see FIG. 8B and FIG. 8C) of one piece of the split forming punch 30 is slid and guided. As illustrated in FIG. 11A and FIG. 11C, a pair of V-shaped tapered guide surfaces 31a are formed so as to be opposed to each other in a diameter direction of the punch base 31.

As illustrated in FIG. 11E, which is a longitudinal section taken along the line G-G of FIG. 11B, bottoms 31d of the pair of V-shaped tapered guide surfaces 31a are inclined so that a radial distance between the bottoms 31d decreases toward an end portion side of the straight and small-diameter outer peripheral surface 31c. With this configuration, when the split forming punch 30 is moved axially relative to the punch base 31, the split forming punch can be reduced in diameter. A cross-section taken along the line H-H of FIG. 11E is illustrated in FIG. 11D. The tapered outer peripheral surface 31b of the punch base 31 is fitted and fixed to the tapered inner peripheral surface 33c of the punch holder 33 illustrated in FIG. 12B.

As illustrated in FIG. 12B, the punch holder 33 is a conical tubular body. The tapered inner peripheral surface 33c is formed on an inner periphery of the punch holder 33, and the end surface 33b that regulates the axially flowing action of the blank M, and the recessed forming surface 33a that forms the phase reference S (see FIG. 6B) on a part of the blank are formed on the upper surface of the punch holder 33. The recessed forming surface 33a that forms the phase reference S, and the end surface 33b are illustrated in FIG. 12C, which is a sectional view taken along the line I-I of FIG. 12A.

Finally, details of an ironing step of the method of ironing a nut for a ball screw according to this embodiment are described with reference to FIGS. 13. FIG. 13A is an illustration of a state in which a blank has been set. FIG. 13B is an illustration of a state immediately before ironing. FIG. 13C is an illustration of a state of the start of ironing. FIG. 13D is an illustration of a state of the end of ironing. FIG. 13E is an illustration of a state in which a nut workpiece has been separated from a forming punch. FIG. 13F is an illustration of a state in which the nut workpiece is discharged.

As illustrated in FIG. 13A, the drawing die 32 and the upper surface restraining die 34 are retracted upward, and the split forming punch 30 is moved upward relative to the punch base 31. When the split forming punch 30 is moved upward relative to the punch base 31, the split forming punch 30 is brought into a state of being reduced in diameter. Under this state, the cylindrical blank M is externally fitted to the split forming punch 30, and is arranged on the punch holder 33.

Then, as illustrated in FIG. 13B, the drawing die 32 and the upper surface restraining die 34 are lowered, the upper surface restraining die 34 is brought into abutment against the split forming punch 30, and the split forming punch 30 is moved relative to the punch base 31 along the inclined surface of the punch base 31. The split forming punch 30 is moved along the inclined surface of the punch base 31, and increased in diameter to a predetermined radial dimension. Under this state, ironing is started as illustrated in FIG. 13C.

As illustrated in FIG. 13D, when the drawing die 32 is lowered, the outer peripheral surface of the blank M is ironed by the tapered inner peripheral surface 32b of the drawing die 32, and the blank M undergoes a drawing action radially inward and a flowing action axially downward. The blank M is reduced in diameter under the drawing action, and the ball circulation groove 20 is transferred to the inner peripheral surface of the blank M by the projecting portion 30a of the split forming punch 30. Further, the axially flowing action of the blank M is regulated by the punch holder 33, but the recessed forming surface 33a that forms a phase reference is formed on a part of the punch holder 33, and hence a part of a material that has undergone the axially downward flowing action flows into the recessed forming surface 33a, to thereby form the phase reference S (see FIG. 6B) to be used for positioning a phase direction in the rolling groove forming step. In this way, the ball circulation groove 20 and the phase reference S are formed simultaneously.

As illustrated in FIG. 13E, when the drawing die 32 is raised, the nut workpiece 5" having the ball circulation groove 20 is raised together with the drawing die 32 while being fitted to the drawing die 32, and the split forming punch 30 is also raised together with the nut workpiece 5" because the projecting portion 30a is fitted in the ball circulation groove 20 of the nut workpiece 5". When the split forming punch 30 is raised, the split forming punch 30 is raised along the inclined surfaces of the punch holder 33 and the punch base 31, and hence is moved radially inward relative to the nut workpiece 5". As a result, the projecting portion 30a of the split forming punch 30 slips out of the ball circulation groove 20 of the nut workpiece 5", and thus the nut workpiece 5" can be removed from the split forming punch 30. As illustrated in FIG. 13F, the upper surface restraining die 34 is lowered, and the nut workpiece 5" is discharged from the drawing die 32.

The rolling groove forming step described above with reference to FIGS. 7 can be performed through use of the phase reference S that is formed by the method of ironing a nut for a ball screw according to this embodiment.

According to the method of ironing a nut for a ball screw of this embodiment, the ball circulation groove can be formed with high precision. Further, when the ball circulation groove and the phase reference are formed simultaneously by ironing, the suppression of a phase shift between the ball circulation groove and the phase reference can be promoted, thereby being capable of achieving a nut for a ball screw with high precision. In addition, an inner die assembly comprising the split forming punch, the punch base, and the punch holder has the highly rigid split-die structure that can be reduced in diameter. This is advantageous in terms of a die assembly life, in addition to being able to form the ball circulation groove with high precision.

The present invention is not limited to the above-mentioned embodiments. As a matter of course, the present invention may be carried out in various modes without departing from the gist of the present invention. The scope of the present invention is defined in claims, and encompasses equivalents described in claims and all changes within the scope of claims.

### DESCRIPTION OF REFERENCE SIGNS

- 1: ball screw
- 3: screw shaft
- 3a: thread groove, ball rolling groove
- 5: nut for ball screw
- 5': nut workpiece
- 5": nut workpiece
- 5a: thread groove, ball rolling groove
- 7: ball rolling path
- 9: ball
- 11: ball circulation path
- 20: ball circulation groove
- 30: split forming punch
- 30a: projecting portion
- 31: punch base
- 32: drawing die
- 33: punch holder
- 33a: forming surface
- 34: upper surface restraining die
- M: blank
- S: phase reference

## Claims

1. A method of manufacturing a nut for a ball screw,
the ball screw comprising:
a screw shaft having a spiral ball rolling groove formed in an outer peripheral surface of the screw shaft;
a nut having a spiral ball rolling groove that is formed in an inner peripheral surface of the nut so as to be opposed to the ball rolling groove of the screw shaft; and
a plurality of balls arranged in a ball rolling path formed by both of the ball rolling grooves, the nut having a ball circulation groove that is formed in the inner peripheral surface and allows the balls to return from an end point to a start point of the ball rolling path,
the method comprising:
a circulation groove forming step of forming the ball circulation groove; and
a rolling groove forming step of forming the ball rolling groove,
wherein in the circulation groove forming step, the ball circulation groove and a phase reference are formed simultaneously in a blank for the nut by plastic working, and
wherein the rolling groove forming step is performed using the phase reference.

2. The method of manufacturing a nut for a ball screw according to claim 1, wherein the plastic working for simultaneously forming the ball circulation groove and the phase reference in the circulation groove forming step is ironing.

3. A method of ironing a nut for a ball screw,
the ball screw comprising:
a screw shaft having a spiral ball rolling groove formed in an outer peripheral surface of the screw shaft;
a nut having a spiral ball rolling groove that is formed in an inner peripheral surface of the nut so as to be opposed to the ball rolling groove of the screw shaft; and
a plurality of balls arranged in a ball rolling path formed by both of the ball rolling grooves, the nut having a ball circulation groove that is formed in the inner peripheral surface and allows the balls to return from an end point to a start point of the ball rolling path,
wherein a die assembly to be used for the ironing comprises:
a split forming punch having a projecting portion corresponding to a recessed portion of the ball circulation groove;
a punch base configured to regulate a position of the split forming punch, and to receive a load acting on the split forming punch;
a drawing die configured to reduce an outer diameter of a blank by ironing an outer peripheral surface of the blank for the nut; and
a punch holder configured to receive an axial load acting on the blank at the time of the ironing of the outer peripheral surface of the blank, and to regulate the position of the split forming punch,
wherein the ball circulation groove is formed by reducing the blank in diameter with the drawing die.

4. The method of ironing a nut for a ball screw according to claim 3,
wherein the punch holder comprises a forming surface corresponding to a phase reference to be used during machining of the ball rolling groove, and
wherein the ball circulation groove and the phase reference are formed simultaneously by reducing the blank in diameter with the drawing die.

5. The method of ironing a nut for a ball screw according to claim 3 or 4,
wherein the die assembly to be used for the ironing further comprises an upper surface restraining die, and
wherein axial deformation is suppressed by restraining an upper surface of the blank by the upper surface restraining die.
